(19) Europäisches Patentamt
European Patent Office
Office européen des brevets

(11) **EP 2 660 548 B1**

(12) **EUROPEAN PATENT SPECIFICATION**

(45) Date of publication and mention
of the grant of the patent:
**06.10.2021 Bulletin 2021/40**

(51) Int Cl.:
*F28D 1/053* (2006.01)    *B60H 1/32* (2006.01)
*F25B 39/04* (2006.01)    *F28F 1/00* (2006.01)
*F28F 1/02* (2006.01)    *F28F 1/30* (2006.01)
*F28D 1/02* (2006.01)    *F25B 5/04* (2006.01)
*F25B 6/04* (2006.01)

(21) Application number: **11853757.0**

(22) Date of filing: **27.12.2011**

(86) International application number:
**PCT/JP2011/007297**

(87) International publication number:
**WO 2012/090485 (05.07.2012 Gazette 2012/27)**

(54) **COOLING MEDIUM RADIATOR**

HEIZKÖRPER MIT KÜHLMEDIUM

RADIATEUR À FLUIDE DE REFROIDISSEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2010 JP 2010292599**

(43) Date of publication of application:
**06.11.2013 Bulletin 2013/45**

(73) Proprietor: **Denso Corporation
Kariya-shi, Aichi 448-8661 (JP)**

(72) Inventor: **KATOH, Yoshiki
Kariya-city
Aichi 448-8661 (JP)**

(74) Representative: **Klingseisen, Franz
Klingseisen, Rings & Partner
Patentanwälte
Postfach 10 15 61
80089 München (DE)**

(56) References cited:
JP-A- 2001 304 719    JP-A- 2001 304 719
JP-A- 2004 218 969    JP-A- 2007 255 857
JP-A- 2009 097 817    JP-A- 2009 097 817
US-A1- 2009 038 562    US-A1- 2010 089 560

• **None**

**Description**

TECHNICAL FIELD

The present invention relates to a method for installing a refrigerant radiator in a vehicle for radiating heat from refrigerant in a vapor compression refrigerant cycle

BACKGROUND ART

Conventionally, refrigerant radiators in vapor-compression refrigerant cycles have been known which radiate heat from high-temperature and high-pressure refrigerant discharged from a compressor by exchanging heat with air For example, a refrigerant radiator disclosed in Patent Document 1 is applied to a vehicle air conditioner The refrigerant radiator serves as a heater for heating air blowing in a vehicle compartment by exchanging heat between refrigerant discharged from the compressor and the blowing air blown into the vehicle compartment that is used as a space to be conditioned

Specifically, the refrigerant cycle disclosed in Patent Document 1 is a so-called supercritical refrigerant cycle that uses carbon dioxide as the refrigerant and in which the pressure of refrigerant on the high-pressure side of the cycle leading from the discharge side of the compressor to the inlet side of a decompression device is equal to or higher than the critical pressure of the refrigerant The refrigerant radiator disclosed in Patent Document 1 radiates heat from the refrigerant in a supercritical state without a phase change of the refrigerant

The refrigerant radiator includes one heat exchange portion disposed on the windward side in the flow direction of blowing air, and the other heat exchange portion disposed on the leeward side thereof The heat exchange portion on the leeward side allows the refrigerant discharged from the compressor to flow from one end to the other end of the radiator, and the other heat exchange portion on the windward side allows the refrigerant to flow from the leeward-side heat exchange portion to flow from the other end to the one end of the radiator Additionally, the heat exchanging capacity of the leeward-side heat exchange portion is set lower than that of the windward-side heat exchange portion

As viewed in the flow direction of the blowing air, the refrigerant radiator with such a structure superimposes one heat exchange portion for allowing the refrigerant with a relatively high temperature to flow therethrough, over the other heat exchange portion for allowing the refrigerant with a relatively low temperature to flow therethrough Thus, the refrigerant radiator can suppress the drastic decrease in temperature of the refrigerant directly after flowing into the leeward side heat exchange portion to reduce the difference in temperature of the air blown from the refrigerant radiator

[Related Art Document]

[Patent Document]

[Patent Document 1]
Japanese Unexamined Patent Publication No. 2004-125346
However, when the refrigerant radiator disclosed in Patent Document 1 is applied to a so-called subcritical refrigerant cycle in which the high-pressure side refrigerant pressure is less than the critical pressure of the refrigerant, the above-mentioned effect of suppressing a non-uniform temperature distribution cannot be sufficiently exhibited. This is because the refrigerant changes from a gas phase with a degree of superheat to a gas-liquid two-phases, and further to a liquid phase with a degree of supercooling when the refrigerant radiates heat at the refrigerant radiator in the subcritical refrigerant cycle

More specifically, in the supercritical refrigerant cycle, the refrigerant radiator radiates heat from the refrigerant kept in the supercritical state The refrigerant flowing through the refrigerant radiator radiates heat while decreasing its temperature at a substantially certain rate Thus, as described in Patent Document 1, the flow direction of the refrigerant in the windward-side heat exchange portion is opposed to that in the leeward-side heat exchange portion, and the refrigerant is prevented from drastically decreasing its temperature directly after flowing into the leeward-side heat exchange portion, and thereby it can reduce the difference in blowing air between the heat exchange portions of the radiator

In contrast, in the subcritical refrigerant cycle, the refrigerant in the gas phase or liquid phase flowing through the refrigerant radiator radiates heat therefrom while decreasing its temperature (that is, decreasing both the temperature and enthalpy), whereas the refrigerant in the gas-liquid two-phase radiates heat therefrom without decreasing its temperature (that is, decreasing only the enthalpy).

As viewed in the flow direction of the blowing air, when one heat exchange portion for the refrigerant in the gas-liquid two-phase state is superimposed over the other heat exchange portion for the refrigerant in the gas-phase state or liquid-phase state in the flow direction of air, the non-uniform temperature distribution of the air flowing from the radiator cannot be sufficiently suppressed in some cases

A radiator for a cooling system for a vehicle is disclosed in US 2009/0038562 A1, in which a plurality of tubes is arranged in fluid communication between a first header and a second header. In this cooling system, the radiator is provided such that a turbulent flow of coolant or cooling water is generated when the vehicle is in a state of a critical driving mode.

A further prior art of JP 2001304719 A relates to a radiator with a plurality of flat pipes between a first header and a second header, in which the radiator has a specific assembly of heat dissipation fins, which are connected to the headers by means of a connector.

In JP 2007255857 A and JP 200997817 A, a radiator or evaporator is disclosed, which has a plurality of flat tubes arranged in parallel with each other and provided with corrugated fins between the flat tubes in order to increase the heat-exchanging performance.

DISCLOSURE OF THE INVENTION

The present invention has been made in view of the above points, and it is an object of the present invention to reduce a difference in temperature of air which exchanges heat with refrigerant and is blown from a refrigerant radiator so as to cause the phase change of the refrigerant flowing therethrough to a gas-phase state, a gas-liquid two-phase state, and a liquid-phase state.

This problem is solved by means of a method for installing a refrigerant radiator in a vehicle according to claim 1. Preferred forms of realization of the invention are defined in the dependent claims.

The disclosures associated with the present invention are proposed based on findings obtained by the following examination and consideration made by the inventors The inventors of the present application have studied about a refrigerant radiator of a subcritical refrigerant cycle applied to a vehicle air conditioner, specifically, the temperature distribution of air blown from the refrigerant radiator serving as the same type of heater as that in Patent Document 1

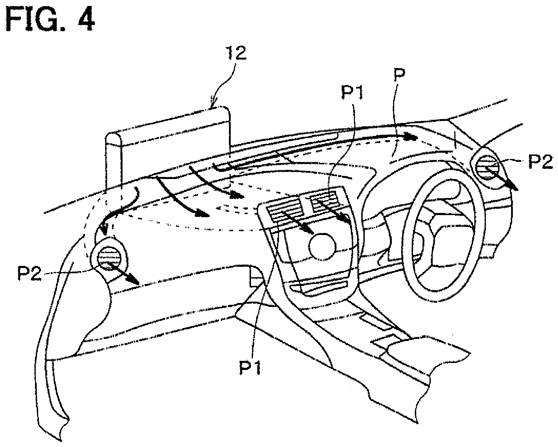

In this kind of vehicle air conditioner, as will be described later with reference to Fig 4, the blowing air heated by a driver-seat side heat exchange portion of the refrigerant radiator is blown mainly toward a driver seat, while the blowing air heated by a front passenger-seat side heat exchange portion is blown mainly toward a front passenger seat Thus, the decrease in temperature of the blowing air in the horizontal direction can reduce the difference in temperature between the air blown toward the driver seat and the air blown toward the front passenger seat

The refrigerant flowing through the refrigerant radiator applied to the subcritical refrigerant cycle changes from the gas-phase refrigerant with a degree of superheat to the gas -liquid two-phase refrigerant, and the liquid-phase refrigerant with a degree of supercooling while flowing from the inlet side to the outlet side of the radiator, which increases the density of the refrigerant When the flow rate of the refrigerant circulating through the cycle is constant, the mass flow rate of the refrigerant flowing through the radiator becomes constant, which decreases the velocity of the refrigerant together with the phase change

In the refrigerant radiator applied to the subcritical refrigerant cycle, the rate of a heat exchange portion for exchanging heat between the blowing air and the gas-phase refrigerant with a relatively difference in temperature from the air, in the whole heat exchange portions, becomes larger in theory, so that the refrigerant radiator can radiate heat from the gas-phase refrigerant in a wide heat exchange portion

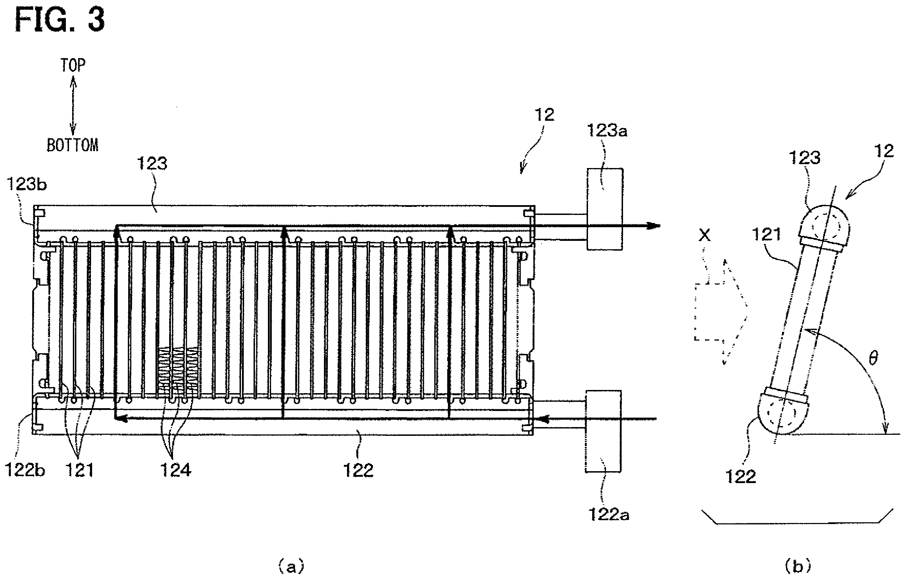

The inventors employs as the refrigerant radiator, a full-path type tank and tube heat exchanger (multi-flow heat exchanger) with the same structure as that of the radiator to be described later in a first embodiment with reference to Figs. 3(a) and 3(b). The refrigerant radiator is disposed such that the longitudinal direction of tubes has at least one component directed vertically Then, the inventors have studied the temperature distribution of the blowing air in the refrigerant radiator The term "direction having at least one component directed vertically" as used in the present application means that the tube extends in the direction perpendicular to the horizontal direction, or at an angle with respect to the horizontal direction

The reason why the longitudinal direction of the tube has the one component directed vertically is that when the refrigerant discharged from the compressor flows into all tubes from a header tank for refrigerant distribution, the non-uniform temperature distribution of the blowing air in the vertical direction occurs, but the difference in temperature of the blowing air in the horizontal direction can be suppressed. In the refrigerant radiator, the header tank for distribution provided with a refrigerant inlet is positioned on the lower side, and a header tank for collection provided with a refrigerant outlet is positioned on the upper side

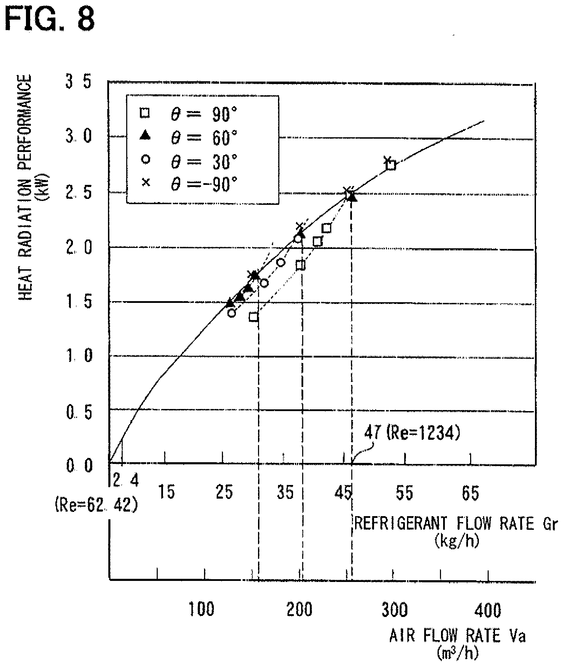

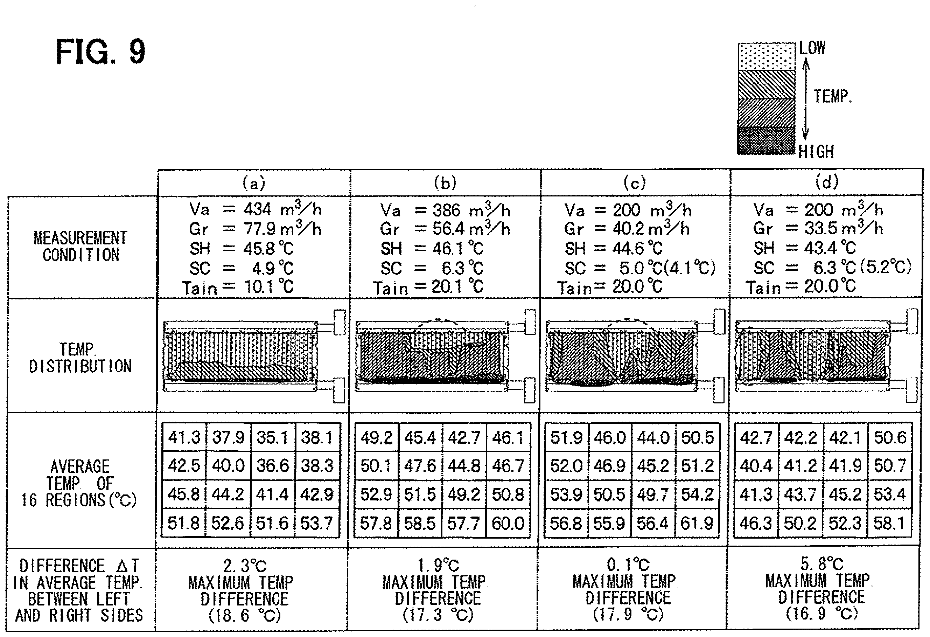

Next, the result of consideration will be described with reference to Figs 8 and 9. As shown in Fig 8, the inventors have examined a change in heat radiation performance of the refrigerant radiator obtained upon changing the flow rate Gr of the refrigerant circulating through the refrigerant cycle to which the refrigerant radiator is applied (that is, the flow rate (kg/h) of the refrigerant flowing through the refrigerant radiator)

Fig. 8 is a graph showing the change in heat radiation performance with respect to the changes in refrigerant flow rate Gr and blowing air flow rate Va ($m^3$/h). The scale of the refrigerant flow rate Gr and the scale of the blowing air flow rate Va in the horizontal axis of Fig. 8 represent the respective flow rates which balance the amount of heat dissipation from the refrigerant and the amount of heat absorption of the blowing air in the refrigerant radiator The relationship between Gr and Va can be approximated by the following formula 1.

[Formula 1]

$$Gr = -0.0002Va + 0.1997Va + 5.4994$$

Fig. 8 shows the heat radiation performance at each of inclination angles θ (in units of degree) of 90 °, 60 °, and 30 ° formed by the flow direction of the refrigerant flowing through the tube and the horizontal direction as viewed in the direction perpendicular to the direction of blowing air Also, Fig 8 plots a heat radiation performance obtained at an inclination angle θ of -90 ° with the distribution header tank positioned on the upper side and the collection header tank positioned on the lower side The inclination angle θ is defined as will be mentioned in detail in the following embodiments

As can be seen from Fig 8, in the refrigerant radiator used for the consideration, the heat radiation performance is greatly decreased with decreasing flow rate Gr of the refrigerant In order to determine the reason for the decrease in heat radiation performance, as shown in Fig 9, the inventors have examined the temperature distribution of the blowing air flowing from the radiator when changing the refrigerant flow rate Gr.

In the examination of the temperature distribution, the heat exchange portion of the refrigerant radiator is divided into 16 regions (portions) An average temperature of blowing air blown from each divided region is determined Further, a difference in temperature between the average temperature of 8 regions of the heat exchange portion on one side (on the right side of the paper of the figure) in the horizontal direction, and the other average temperature of other 8 regions on the other side in the horizontal direction (on the left side of the paper of the figure) is regarded as a difference ΔT in average temperature between the left and right sides. The difference ΔT in average temperature between the left and right sides difference can be used as an index representing the temperature distribution of the blowing air in the horizontal direction.

In examples (a) to (d) of Fig. 9, an air flow rate Va, a refrigerant flow rate Gr, a degree of superheat SH of the refrigerant at the inlet of the radiator 12, a degree of supercooling SC of the refrigerant at the outlet of the radiator 12, and a temperature Tain of air flowing into the radiator 12 are simply indicated by reference characters Va, Gr, SH, SC, and Tain, respectively

Fig. 9 shows that with decreasing refrigerant flow rate Gr, an area of the regions with a relatively low temperature in the heat exchange portion is increased (see the substantially center area enclosed by a broken line in the heat exchange portion shown in the examples (b) and (c) of Fig. 9). When the refrigerant flow rate Gr is further decreased, the number of regions with the relatively low temperature in the heat exchange portion is increased (see a left side part in the paper of the figure as well as the substantially center area enclosed by a broken line in the heat exchange portion shown in the example (d) of Fig 9).

That is, as the flow rate Gr decreases, the area of the regions with the relatively low temperature in the heat exchange portion, that is, the regions that cannot sufficiently heat the blowing air in the heat exchange portion is increased, which leads to reduction in heat radiation performance as the entire refrigerant radiator As shown in the example (d) of Fig. 9, the formation of the regions with the relatively low temperature in the heat exchange portion increases the difference in average temperature ΔT between the left and right sides, thus degrading the uniformity of the temperature distribution of the blowing air in the horizontal direction,

The inventors have further studied and found out that the formation of the regions with the relatively low temperature in the entire heat exchange portion of the refrigerant radiator is caused by a difference in degree of condensation of the refrigerant between the respective tubes

More specifically, the gas-phase refrigerant flows into each tube of the refrigerant radiator, so that the distribution of the refrigerant flowing into the tubes is relatively good, but it is difficult to completely uniformly distribute the refrigerant to all tubes due to influences, including a loss in pressure in the header tank, an inertial force of the refrigerant inflow, and the like Even when the air flows relatively uniformly into all heat exchange portions of the radiator, some tubes let the less refrigerant through

In such a specific region for heat exchange composed of the tubes for allowing the less refrigerant to pass therethrough, the refrigerant flowing through the tubes is more likely to be condensed than the refrigerant flowing through tubes forming other regions for heat exchange At this time, when the difference in pressure of the refrigerant between the inlet and outlet of the tube is decreased with decreasing refrigerant flow rate Gr; the flow rate or velocity of the condensed refrigerant is further reduced, which makes it difficult for the condensed refrigerant to flow out of the tubes

Thus, when the condensed refrigerant is attached to a wall of a refrigerant passage or the like to stay in the tube, an area of the refrigerant passage of each of the tubes forming the specific heat exchange portion becomes narrower than that of a refrigerant passage of tubes in other regions, which increases a loss in pressure of the refrigerant at the tubes with the refrigerant attached thereto. As a result, the tubes forming the specific heat exchange portion are less likely to allow the high-temperature refrigerant discharged from the compressor to flow thereinto, as compared to the tubes forming other regions, which might form the specific heat exchange portion with the relatively low temperature (hereinafter referred to as a "low-temperature region")

The inventors have further examined the loss in pressure of the refrigerant in the tubes forming the low-temperature region, and found out that the increase in loss of pressure of the tubes forming the low-temperature region is caused by the condensed refrigerant staying in the tubes. Then, the inventors have paid attention to the following factors, in addition to the flow velocity U of refrigerant serving as a source of energy for pushing out the refrigerant:

(1) an increase in loss of pressure due to an increase in viscosity $\mu$ caused by the condensed refrigerant; and
(2) a decrease in loss of pressure due to a decrease in density p caused by the condensed refrigerant
Further, the inventors also have paid attention to the following factor in the refrigerant radiator for allowing the refrigerant to flow from the lower side to the upper side in the tube:
(3) an increase in loss of pressure calculated based on the gravity acting on the condensed refrigerant

That is, by taking into consideration and controlling an inclination angle $\theta$ as a parameter required for calculation of the flow velocity U, viscosity $\mu$, density $\rho$ of the refrigerant, and the gravity acting on the condensed refrigerant, the loss in pressure of the refrigerant at tubes 121 forming the low-temperature region can be set equal to that at tubes forming other regions to suppress the formation of the specific heat exchange portion with the relatively low temperature.

Based on the above findings, the inventors have calculated arrangement conditions of the refrigerant radiator that can suppress the formation of the specific heat exchange portion with the relatively low temperature, by simulation calculation using the inclination angle $\theta$ and a Reynolds number defined as a ratio of inertial forces to viscous forces by use of the flow velocity U, viscosity $\mu$, and density $\rho$ of the refrigerant, and then expressed the result by an approximation formula.

The calculation of the arrangement conditions for the refrigerant radiator employs the average flow velocity of refrigerant flowing through the tubes as the flow velocity U of the refrigerant The refrigerant flowing into the refrigerant radiator is a gas-phase refrigerant having a 45 °C of supercooling degree at a pressure of 2 MPa and the flow rate of air flowing into the radiator is 200 m$^3$/h at 20 °C The viscosity $\mu_m$ of the gas-liquid two-phase fluid required for determining an increase in loss of pressure in the above formula (1) is determined using a Taylor formula expressed by the following formula (2).

[Formula 2]

$$\mu = \mu_1\{1 + 2.5\alpha_g (\rho_l - \rho_g)/ \rho_l\}$$

$\mu_m$: Viscosity of gas-liquid two-phase fluid
$\mu_1$ : Viscosity of liquid-phase fluid
$\alpha_g$: Void fraction
$\rho_i$: Density of liquid-phase fluid
$\rho_g$: Density of gas-phase fluid

The void fraction $\alpha_g$ of the gas-liquid two-phase fluid required for the Taylor formula is determined using a Levy formula (Levy's momentum minimal model) expressed by the following formula 3

[Formula 3]

$$(1-\alpha_g)/\alpha_g \cdot x/(1-x) = (\rho_g/\rho_l)^{1/2}$$

x: Dryness
$\alpha_g$: Void fraction
$\rho_i$: Density of liquid-phase fluid
$\rho_g$: Density of gas-phase fluid

As a result, at the inclination angle ($\theta$) of $0 < \theta \le 90\,°$, that is, in the refrigerant radiator for allowing the refrigerant to flow through the tube from the lower side to the upper side, the arrangement conditions expressed by the following formula 4 is set, so that the loss in pressure of the refrigerant at the tubes forming the low-temperature region is equal to that at the tubes forming other regions, which can suppress the formation of the region with the relatively low temperature in the heat exchange portion,

[Formula 4]

$$Re \ge A \times X^6 + B \times X^5 + C \times X^4 + D \times X^3 + E \times X^2 + F \times X + G$$

$$A = -0.0537 \times \theta^2 + 9.7222 \times \theta + 407.19$$

$$B = -(-0.2093 \times \theta^2 + 37.88 \times \theta + 1586.3)$$

$$C = -0.3348 \times \theta^2 + 60.592 \times \theta + 2538.1$$

$$D = -(-0.2848 \times \theta^2 + 51.53 \times \theta + 2158.2)$$

$$E = -0.1402 \times \theta^2 + 25.365 \times \theta + 1062.8$$

$$F = -(-0.0418 \times \theta^2 + 7.5557 \times \theta + 316.46)$$

$$G = -0.0132 \times \theta^2 + 2.3807 \times \theta + 99.73$$

According to a first aspect of the present disclosure based on the above findings, a refrigerant radiator which is applied to a vapor-compression refrigerant cycle is adapted to exchange heat between a high-temperature and high-pressure refrigerant compressed by a compressor and air blown into a space for air conditioning to thereby radiate heat from a gas-phase refrigerant with a degree of superheat to transfer the gas-phase refrigerant to a liquid-phase refrigerant with a degree of supercooling The refrigerant radiator includes a plurality of tubes for allowing the refrigerant to flow therethrough from an upper side to a lower side; a first header coupled to ends of the tubes for distributing the refrigerant to flow into at least some of the tubes; and a second header coupled to the other ends of the tubes for collecting the refrigerants flowing from at least some of the tubes When the phase change of the refrigerant occurs in the tube in the refrigerant radiator for allowing the refrigerant to flow through the tubes from the upper side to the lower side, the refrigerant radiator of the disclosure can suppress the non-uniform loss in pressure of the refrigerant in the tubes. Thus, the refrigerant radiator of the disclosure can prevent the formation of the specific heat exchange portion with the relatively low temperature in the entire heat exchange portion of the refrigerant radiator.

For example, according to a second aspect of the present disclosure, the refrigerant radiator used in the region satisfying the relationship of $62.42 \le Re < 1234$ where the flow of refrigerant flowing through the tube becomes a forced convection is desirably a refrigerant evaporator for allowing the refrigerant to flow through the tubes from the upper side to the lower side that does not need to take into consideration an increase in loss of the pressure calculated based on the gravity acting on the condensed refrigerant

According to a third aspect of the present disclosure, a refrigerant radiator is used for a vapor-compression refrigerant cycle, and is adapted to exchange heat between a high-temperature and high-pressure refrigerant compressed by a compressor of the vapor-compression refrigerant cycle and air blown into a space for air conditioning to thereby radiate heat from a gas-phase refrigerant having a degree of superheat so as to transfer the gas-phase refrigerant to a liquid-phase refrigerant having a degree of supercooling The refrigerant radiator includes a plurality of tubes for allowing the refrigerant to flow therethrough, and the tube extends in a direction perpendicular to a horizontal direction, or at an angle with respect to the horizontal direction Furthermore, the tubes are disposed so as to satisfy the following relationship:

$$Re \ge A \times X^6 + B \times X^5 + C \times X^4 + D \times X^3 + E \times X^2 + F \times X + G$$

$$A = -0.0537 \times \theta^2 + 9.7222 \times \theta + 407.19$$

$$B = -(-0.2093 \times \theta^2 + 37.88 \times \theta + 1586.3)$$

$$C = -0.3348 \times \theta^2 + 60.592 \times \theta + 2538.1$$

$$D = -(-0.2848 \times \theta^2 + 51.53 \times \theta + 2158.2)$$

$$E = -0.1402 \times \theta^2 + 25.365 \times \theta + 1062.8$$

$$F = -(-0.0418 \times \theta^2 + 7.5557 \times \theta + 316.46)$$

$$G = -0.0132 \times \theta^2 + 2.3807 \times \theta + 99.73$$

wherein $\theta$ (°) is an inclination angle formed by a flow direction of the refrigerant flowing through the tube and the horizontal direction; X is a dryness of the refrigerant in a predetermined position where the refrigerant flowing through the tube is a gas-liquid two-phase refrigerant; and Re is a Reynolds number of the refrigerant in the predetermined position that is determined from an average flow velocity (m/S) of the refrigerant flowing through the tube, and

wherein as the flow direction of the refrigerant flowing through the tube changes from a vertically downward side to a vertically upward side, the inclination angle ($\theta$) changes in a range of more than 0° and not more than 90° ($0 < \theta \leq 90°$)

Thus, for the inclination angle ($\theta$) of $0 < \theta \leq 90$ °, that is, in the refrigerant radiator for allowing the refrigerant to flow through the tubes from the lower side to the upper side, even in the phase change of the refrigerant flowing through the tubes, the non-uniform loss in pressure of the refrigerant in the respective tubes can be suppressed by taking into consideration parameters, including the flow velocity, viscosity, density of the refrigerant and the inclination angle ($\theta$), The refrigerant radiator of the disclosure can suppress the formation of the specific heat exchange portion with the relatively low temperature in the entire heat exchange portion of the refrigerant radiator

As a result, even if the flow rate of the refrigerant circulating through the refrigerant cycle is changed and the flow velocity of the refrigerant flowing through the tube is changed, such an arrangement can suppress the reduction in heat radiation performance of the refrigerant radiator and can also suppress the non-uniform temperature distribution in the horizontal direction of air heated and blown by the refrigerant radiator

The term "predetermined position" as used herein can be any arbitrary position as long as the refrigerant flowing through the tube is the gas-liquid two-phase refrigerant in the position That is, even when the dryness (X) of the refrigerant flowing through the tube is changed, the Reynolds number (Re) is calculated using the dryness (X), which can prevent the formation of the specific heat exchange portion with the relatively low temperature even in use of any arbitrary position as the predetermined position

The phrase "tube extends in the direction having at least one component directed vertically" as used herein means not only that the entire tube extends vertically, but also that a part of the tube extends vertically.

The refrigerant radiator according to a fourth aspect of the disclosure may further include a header tank disposed on at least one end side of each of the tubes to extend in a lamination direction of the tubes, and adapted to collect or distribute the refrigerant

In a multi-flow heat exchanger structure for collecting or distributing the refrigerants flowing through the tubes using a header tank, the flow rate of refrigerant flowing through each tube tends to be changed depending on the position of the inlet or outlet of the refrigerant provided in the header tank, and thereby it may cause the temperature distribution of the blowing air Thus, the arrangement conditions that can reduce the difference in temperature of blowing air can be applied to such a refrigerant radiator structure, which is very effective

According to a fifth aspect of the disclosure, the tubes include a first tube group for allowing the refrigerant to flow therethrough from a lower side to an upper side, and a second tube group for allowing the refrigerant to flow therethrough from the upper side to the lower side.

In the refrigerant radiator according to a sixth aspect of the disclosure, an internal space of the header tank is separated into a plurality of spaces, and one separated space is provided with a refrigerant inlet for allowing the gas-phase refrigerant to flow into the one separated space, and the other separated space is provided with a refrigerant outlet for allowing the liquid-phase refrigerant to flow from the other separated space

In the refrigerant radiator according to a seventh aspect of the disclosure, the tubes may be arranged in the flow direction of the blowing air. One of the heat exchange portions on the windward and leeward sides is defined as a region for allowing the refrigerant with a degree of superheat to flow therethrough (superheat-degree region), and the other on the leeward side is defined as a region for allowing the refrigerant with a degree of supercooling to flow therethrough (supercooling region) The superheat region and the supercooling region are superimposed over each other as viewed in the flow direction of the blowing air, which can reduce the difference in temperature of blowing air in the vertical direction.

In the refrigerant radiator according to an eighth aspect of the disclosure, the flow directions of the refrigerants flowing through the tubes may be the same

In the refrigerant radiator according to a ninth aspect of the disclosure, the refrigerant cycle may be applied to a vehicle air conditioner, and the space for air conditioning may be an interior of a vehicle

Thus, the heat radiator of the disclosure can reduce the difference in temperature in the horizontal direction of the blowing air, specifically, the difference in temperature between the air blown toward the driver seat and the air blown toward the front passenger seat

BRIEF DESCRIPTION OF DRAWINGS

The above and other objects, structures, and advantages of the present invention will become apparent from the following detailed description of the invention, when taken in conjunction with the accompanying drawings, which respectively show:

Fig. 1 is an entire configuration diagram showing refrigerant flow paths of a heat pump cycle in a heating operation according to a first embodiment;

Fig 2 is an entire configuration diagram showing refrigerant flow paths of the heat pump cycle in a cooling operation in the first embodiment;

Fig 3(a) is a front view of a refrigerant radiator in the first embodiment, and Fig. 3(b) is a side view of the refrigerant radiator shown in Fig 3(a);

Fig, 4 is a schematic diagram showing an arrangement state of the refrigerant radiator in the first embodiment;

Fig. 5(a) is a front view of a refrigerant radiator according to a second embodiment, and Fig 5(b) is a side view of the refrigerant radiator shown in Fig 5(a);

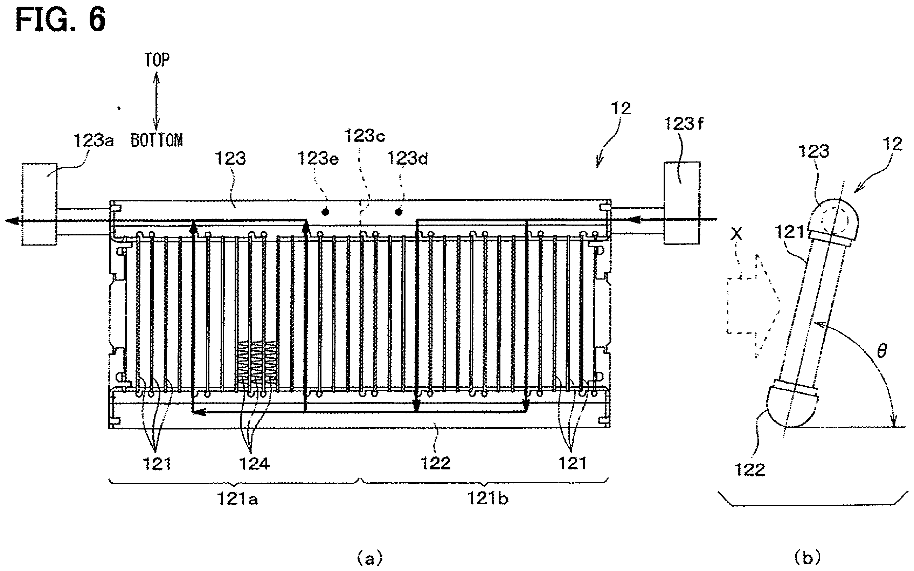

Fig, 6(a) is a front view of a refrigerant radiator according to a third embodiment, and Fig 6(b) is a side view of the refrigerant radiator shown in Fig 6(a);

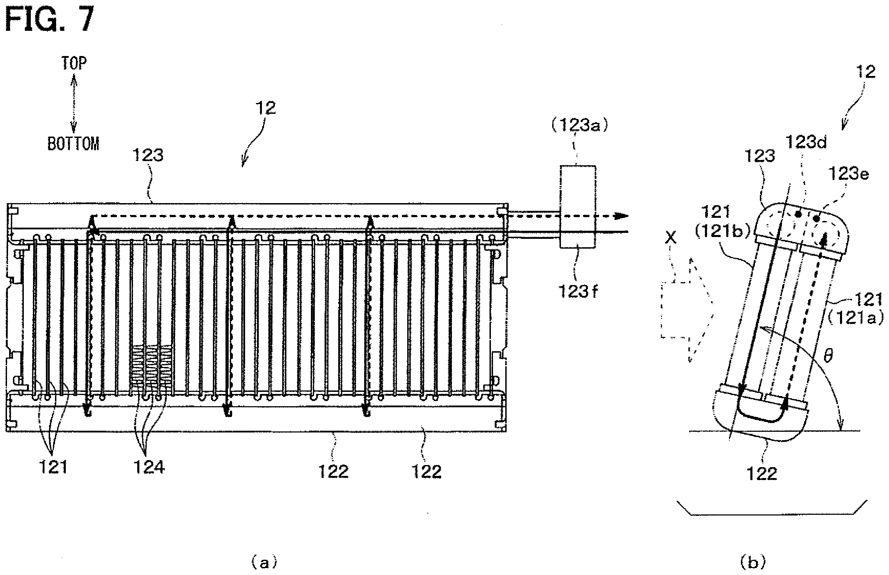

Fig 7(a) is a front view of a refrigerant radiator according to a fourth embodiment, and Fig. 7(b) is a side view of the refrigerant radiator shown in Fig. 7(a);

Fig. 8 is a graph showing a change in heat radiation performance with respect to changes in refrigerant flow rate and air flow rate of the refrigerant radiator for consideration made by the applicant(s);

Fig 9 is a schematic diagram showing the result of experiments of temperature distribution in the refrigerant radiator for consideration made by the applicant(s); and

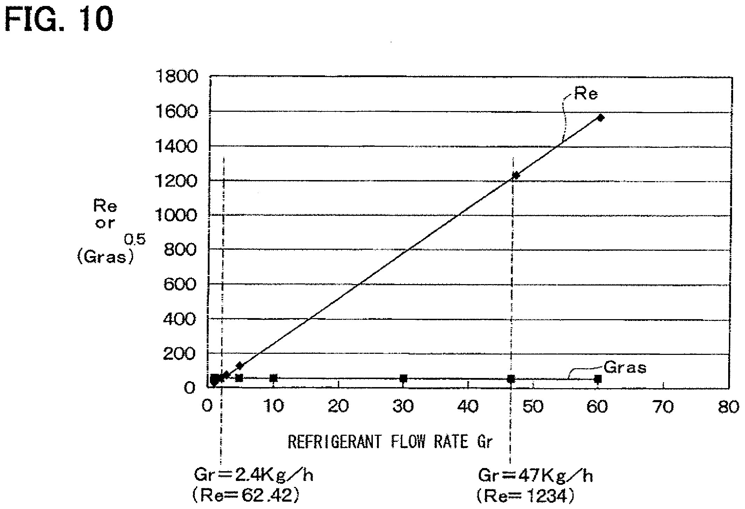

Fig 10 is a graph showing a change in Reynolds number or Grashof number with respect to the refrigerant flow rate in the refrigerant radiator for consideration made by the applicant(s).

MODE FOR CARRYING OUT THE INVENTION

Some embodiments for carrying out the invention will be described below with reference to the accompanying drawings The same or equivalent parts of each embodiment corresponding to components described in the previous embodiment are indicated by the same reference numerals, and thus the repeated description thereof will be omitted. When only a part of the structure in each embodiment is explained, other parts of the structure can be applied to the description of the previous embodiment. The combination of the parts is not limited to those specifically described in the respective embodiments. As long as the combination does not raise any problems, the embodiments can be partly combined even though the combination is not suggested in the present specification

First Embodiment

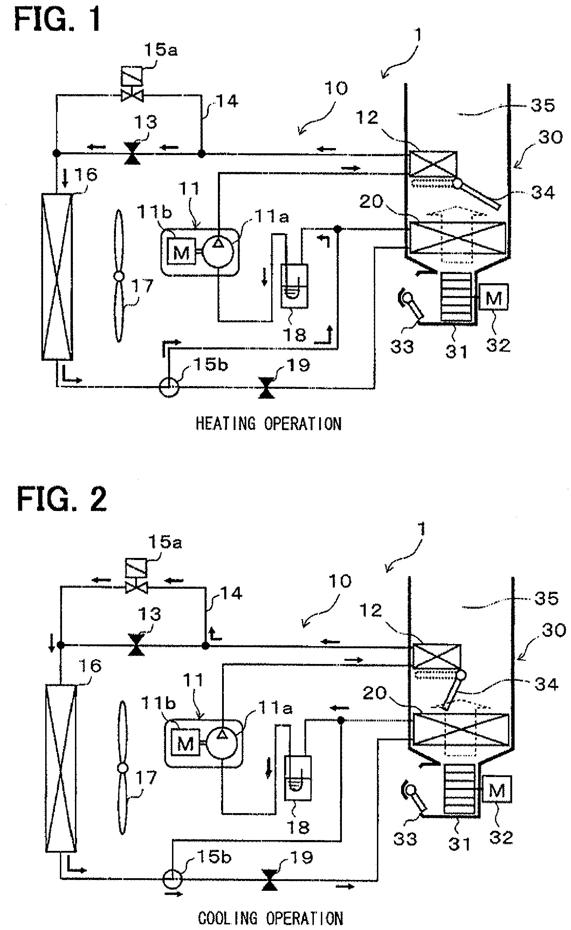

A first embodiment of the disclosure will be described with reference to Figs 1 to 4 In this embodiment, a heat pump cycle 10 (vapor-compression refrigerant cycle) with a refrigerant radiator 12 of the disclosure is applied to a vehicle air conditioner 1 Fig 1 is an entire configuration diagram of the vehicle air conditioner 1 in this embodiment. The vehicle air conditioner 1 can be applied not only to a normal engine vehicle which obtains a driving force for traveling from an engine (internal combustion engine), but also various types of vehicle, such as a hybrid vehicle or an electric vehicle

The heat pump cycle 10 in the vehicle air conditioner 1 serves to heat or cool the blowing air in the vehicle compartment to be blown into the vehicle interior as a space for air conditioning That is, the heat pump cycle 10 can switch between refrigerant flow paths to thereby perform a heating operation (heater operation) and a cooling operation (cooler operation). The heating operation is performed to heat the vehicle interior by heating the blowing air in the vehicle compartment as a fluid for heat exchange. The cooling operation is performed to cool the vehicle interior by cooling the blowing air in the vehicle compartment.

In the entire configuration diagrams of Figs. 1 and 2 showing the heat pump cycle 10, the flow of refrigerant in the heating operation and the flow of refrigerant in the cooling operation each are indicated by a solid line.

The heat pump cycle 10 of this embodiment employs HFC-based refrigerant (specifically, R134a) as the refrigerant, and forms a subcritical refrigerant cycle whose high-pressure side refrigerant pressure does not exceed the critical pressure of the refrigerant HFO-based refrigerant (specifically, R1234yf) may be employed as long as the refrigerant forms the subcritical refrigerant cycle, Refrigerating machine oil for lubricating a compressor 11 is mixed into the refrigerant, and a part of the refrigerating machine oil circulates through the cycle together with the refrigerant

The compressor 11 is positioned in an engine room, and is to suck, compress, and discharge the refrigerant in the heat pump cycle 10 The compressor is an electric compressor which drives a fixed displacement compressor 11a having a fixed discharge capacity by use of an electric motor 11b Specifically, various types of compression mechanisms, such as a scroll type compression mechanism, or a vane compression mechanism, can be employed as the fixed displacement compressor 11a

The electric motor 11b may be either an AC motor or a DC motor whose operation (number of revolutions) is controlled by a control signal output from an air conditioning controller to be described later The control of the number of revolutions of the motor changes a refrigerant discharge capacity of the compressor 11 Thus, in this embodiment, the electric motor 11b serves as a discharge capacity changing portion of the compressor 11.

A refrigerant discharge port of the compressor 11 is coupled to a refrigerant inlet side of a refrigerant radiator 12, The refrigerant radiator 12 is disposed in a casing 31 of an indoor air conditioning unit 30 of the vehicle air conditioner 1 to be described later. The refrigerant radiator is a heat exchanger for heating that exchanges heat between a high-temperature and high-pressure refrigerant flowing therethrough and the blowing air in the vehicle compartment having passed through a refrigerant evaporator 20 to be described later The detailed structures of the refrigerant radiator 12 and the indoor air conditioning unit 30 will be described later.

A fixed throttle 13 for heating is coupled to a refrigerant outlet side of the refrigerant radiator 12. The fixed throttle 13 serves as a decompression portion for the heating operation that decompresses and expands the refrigerant flowing from the refrigerant radiator 12 in the heating operation The fixed throttle 13 for heating can use an orifice, a capillary tube, and the like. The outlet side of the fixed throttle 13 for heating is coupled to the refrigerant inlet side of the outdoor heat exchanger 16

A bypass passage 14 for the fixed throttle is coupled to the refrigerant outlet side of the refrigerant radiator 12. The bypass passage 14 causes a refrigerant flowing from the refrigerant radiator 12 to bypass the fixed throttle 13 for heating and to guide the refrigerant into the outdoor heat exchanger 16 An opening/closing valve 15a for opening and closing the bypass passage 14 for the fixed throttle is disposed in the bypass passage 14 for the fixed throttle The opening/closing valve 15a is an electromagnetic valve whose opening and closing operations are controlled by a control voltage output from the air conditioning controller

The loss in pressure caused when the refrigerant passes through the opening/closing valve 15a is extremely small as compared to the loss in pressure caused when the refrigerant passes through the fixed throttle 13 for heating. Thus, when the opening/closing valve 15a is opened, the refrigerant flows from the refrigerant radiator 12 into the outdoor heat exchanger 16 via the bypass passage 14 for the fixed throttle. In contrast, when the opening/closing valve 15a is closed, the refrigerant flows into the outdoor heat exchanger 16 via the fixed throttle 13 for heating

Thus, the opening/closing valve 15a can switch between the refrigerant flow paths of the heat pump cycle 10 The opening/closing valve 15a of this embodiment serves as a refrigerant flow path switching portion Alternatively, as such a refrigerant flow path switching portion, an electric three-way valve or the like may be provided for switching between a refrigerant circuit for coupling the outlet side of the refrigerant radiator 12 to the inlet side of the fixed throttle 13 for heating, and another refrigerant circuit for coupling the outlet side of the refrigerant radiator 12 to the inlet side of the bypass passage 14 for the fixed throttle

The outdoor heat exchanger 16 is to exchange heat between the low-pressure refrigerant flowing therethrough and an outside air blown from a blower fan 17. Further, the outdoor heat exchanger 16 is disposed in an engine room, and is a heat exchanger which serves as an evaporator for evaporating the low-pressure refrigerant to exhibit a heat absorption effect in the heating operation, and also as a radiator for radiating heat from the high-pressure refrigerant in the cooling operation

The blower fan 17 is an electric blower whose operating ratio, that is, whose number of revolutions (volume of blowing air) is controlled by a control voltage output from the air conditioning controller The outdoor heat exchanger 16 has its outlet side connected to an electric three-way valve 15b. The three-way valve 15b has its operation controlled by a control voltage output from the air conditioning controller, and serves as a refrigerant flow path switch together with the above opening/closing valve 15a

More specifically, in the heating operation, the three-way valve 15b performs switching to the refrigerant flow path for coupling the outlet side of the outdoor heat exchanger 16 to the inlet side of an accumulator 18 to be described later In contrast, in the cooling operation, the three-way valve 15b performs switching to the refrigerant flow path for coupling the outlet side of the outdoor heat exchanger 16 to the inlet side of a fixed throttle 19 for cooling.

The fixed throttle 19 for cooling serves as a decompression portion for the cooling operation for decompressing and expanding the refrigerant flowing from the outdoor heat exchanger 16 in the cooling operation The fixed throttle 19 has the same basic structure as that of the above fixed throttle 13 for heating The outlet side of the fixed throttle 19 for cooling is coupled to the refrigerant inlet side of the refrigerant evaporator 20 as an indoor evaporator

The refrigerant evaporator 20 is disposed on the upstream side of the air flow with respect to the refrigerant radiator 12 in the casing 31 of the indoor air conditioning unit 30 The refrigerant evaporator 20 is a heat exchanger for cooling that exchanges heat between the blowing air in the vehicle compartment and the refrigerant flowing thererough to thereby cool the blowing air within the vehicle interior A refrigerant outlet side of the refrigerant evaporator 20 is coupled to an inlet side of the accumulator 18

The accumulator 18 is a gas-liquid separator for the low-pressure side refrigerant that separates the refrigerant flowing thereinto into liquid and gas phases, and which stores therein the excessive refrigerant within the cycle, A vapor-phase refrigerant outlet of the accumulator 18 is coupled to a suction side of the compressor 11. Thus, the accumulator 18 serves to suppress the suction of the liquid-phase refrigerant into the compressor 11 to thereby prevent the liquid compression of the compressor 11.

Next, the detailed structure of the refrigerant radiator 12 will be described using Figs 3(a) and 3(b) Fig. 3(a) is a front view of the refrigerant radiator 12, and Fig. 3(b) is an exemplary side view of Fig. 3(a) For easy understanding, Fig 3(b) omits the illustration of an inlet side connector 122a and an outlet side connector 123a to be described later.

Vertical arrows shown in Fig 3(a) indicate the respective upward and downward directions with the refrigerant radiator 12 mounted inside the casing 31 of the indoor air conditioning unit 30 The same goes for the following drawings.

Specifically, as shown in Figs. 3(a) and 3(b), the refrigerant radiator 12 includes a plurality of tubes 121 through which the high-temperature and high-pressure refrigerant discharged from the compressor 11 flows, and a pair of header tanks 122 and 123 disposed on both sides in the longitudinal direction of the tubes 121 for collecting or distributing the refrigerant flowing through the tubes 121 The refrigerant radiator 12 is a full-path type multi-flow heat exchanger in which the flow directions of the refrigerants flowing through the respective tubes 121 are the same

The tube 121 is formed of metal with excellent conductivity (for example, an aluminum alloy), and is a flat tube with a flat cross section in the direction perpendicular to the flow direction of the refrigerant flowing therethrough. Further, the flat outer surface of the tube 121 (flat surface) is disposed in parallel to the flow direction X of the blowing air in the vehicle compartment, The tube 121 may be formed of a flat tube with a single or multiple holes. The tube 121 is desirably comprised of a refrigerant flow path with a diameter de ($4 \times$ flow path sectional area $\times$ length of wet side of flow path) of 0 5 to 1.5 mm in terms of diameter of the circle.

The tubes 121 are laminated in the horizontal direction such that the flat surfaces of the tubes 121 are in parallel to each other An air passage for allowing the blowing air in the vehicle compartment to flow therethrough is formed between the adjacent tubes 121 Also, a fin 124 for promoting the heat exchange between the refrigerant and the blowing air in the vehicle compartment is disposed in between the adjacent tubes 121.

Each fin 124 is a corrugated fin formed by bending a thin plate made of the same material as the tube 121, in a wave shape. The fin 124 has its top soldered to the flat surface of the tube 121 Although Fig 3(a) illustrates only a part of the fins 124 for easy understanding, each fin 124 is disposed over the substantially entire region between the adjacent tubes 121.

The header tanks 122 and 123 are cylindrical members extending in the lamination direction of the tubes 121 (horizontally in this embodiment) In this embodiment, with the refrigerant radiator 12 mounted inside the casing 31 of the indoor air conditioning unit 30, the lower header tank is used as the header tank 122 for distribution of the refrigerant, and the upper header tank is used as the header tank 123 for collection of the refrigerant

Each of the header tanks 122 and 123 Is composed of a separation type header tank which is formed of the same material as the tube 121 The header tank is formed in a cylindrical shape, and includes a plate soldered to the end of each tube 121 in the longitudinal direction, and a tank member combined with the plate Alternatively, the header tanks 122 and 123 may be formed of a cylindrical member or the like

The inlet side connector 122a is disposed on one end of the lower header tank 122 for distribution of the refrigerant The connector 122a serves as a connecting portion to a discharge port of the compressor 11. The connector 122a is provided with a refrigerant inlet for allowing the refrigerant to flow into the header tank 122 The other end of the header tank 122 is closed by a tank cap 122b serving as a closing member

The outlet side connector 123a is disposed on one end of the upper header tank 123 for collection of the refrigerant The connector 123a serves as a connecting portion with an inlet side of the fixed throttle 13 for heating and an inlet side of a bypass passage 14 for the fixed throttle The connector 123a is provided with a refrigerant outlet for allowing the refrigerant to flow from the header tank 123. The other end of the header tank 123 is closed by a tank cap 123b serving as the closing member

Thus, in the refrigerant radiator 12, as indicated by a thick arrow of Fig 3(a), the refrigerant discharged from the compressor 11 flows into the header tank 122 for distribution of the refrigerant via the inlet side connector 122a, and is then distributed to the tubes 121 The refrigerant entering each tube 121 exchanges heat with the blowing air in the vehicle compartment while flowing through the tubes 121, and then flows from the tubes 121. The refrigerants flowing from the tubes 121 are collected into the header tank 123 for collection of the refrigerant to flow out via the outlet side connector 123a. That is, the refrigerant flows through the tubes 121 from the lower side to the upper side.

At this time, as mentioned above, the heat pump cycle 10 of this embodiment forms the subcritical refrigerant cycle, so that the refrigerant flowing through each tube 121 changes from a gas -phase refrigerant with a degree of superheat, to a gas-liquid two-phase refrigerant and a liquid-phase refrigerant with a degree of supercooling in that order while exchanging heat with the vehicle-interior blowing air within the tubes 121

In the refrigerant radiator 12 of this embodiment, as shown in Fig. 3(b), the tube 121 is disposed such that the longitudinal direction of the tube is slanted with respect to the horizontal direction That is, the longitudinal direction of the tube 121 has at least a component directed vertically (in the up-and-down direction) In short, the flow direction of the refrigerant flowing through each tube 121 is slanted or vertical with respect to the horizontal direction.

This embodiment defines an inclination angle $\theta$ (-90 $^\circ \leq \theta \leq 90$ $^\circ$) as an angle formed between a line extending from the refrigerant flow upstream side of the refrigerant radiator 12 (header tank 122 for distribution of the refrigerant in this embodiment) as a starting point toward the refrigerant flow downstream side (header tank 123 for collection of the refrigerant in this embodiment), and another line extending from the refrigerant flow upstream side of the radiator 12 as a starting point in the horizontal direction

That is, the inclination angle $\theta$ changes from 0 to 90 $^\circ$ as the flow direction of the refrigerant flowing through the tube 121 changes from the horizontal direction to the vertically upward direction For example, when the flow direction of refrigerant flowing through the tube 121 is directed in the horizontal direction, the inclination angle becomes zero (inclination angle $\theta$ = 0 $^\circ$) When the flow direction of refrigerant is directed vertically upward, the inclination angle becomes 90 $^\circ$(inclination angle $\theta$ = 90 $^\circ$). Further, when the flow direction of refrigerant is directed vertically downward, the inclination angle becomes -90° (inclination angle $\theta$ = -90°).

In this embodiment, the refrigerant radiator 12 is disposed so as to satisfy the above-mentioned formula 4 when X is a dryness of the refrigerant in a predetermined position where the refrigerant flowing through the tube 121 is a gas-liquid two-phase refrigerant, and Re is a Reynolds number of the refrigerant determined from an average flow velocity (in units of m/S) of the refrigerant flowing through the tube 121

The above predetermined position of the refrigerant radiator 12 in this embodiment can be arbitrary as long as the refrigerant flowing through the tube 121 is the gas-liquid two-phase refrigerant in the predetermined position For example, the predetermined position can be a part on the downstream side of the refrigerant flow of the tube 121, or a part of the tube 121 closer to the header tank 123 for collection of the refrigerant than the header tank 122 for distribution of the refrigerant

Next, the indoor air conditioning unit 30 will be described below. The indoor air conditioning unit 30 is disposed inside a gauge board (instrument panel) at the forefront of the vehicle compartment, The unit 30 accommodates in the casing 31 forming an outer envelope, a blower 32, the above-mentioned refrigerant radiator 12, and the refrigerant evaporator 20

The casing 31 forms an air passage for the blowing air in the vehicle compartment to be blown into the vehicle interior. The casing 31 is formed of resin (for example, polypropylene) having some degree of elasticity, and excellent strength An inside/outside air switch 33 for switching between the air (inside air) in the vehicle compartment and the outside air is disposed on the most upstream side of the vehicle-interior blowing air flow in the casing 31

The inside/outside air switch 33 is provided with the inside air inlet for introducing the inside air into the casing 31, and the outside air inlet for introducing the outside air thereinto An inside/outside air switching door is positioned inside the inside/outside air switch 33 to continuously adjust the opening areas of the inside air inlet and the outside air inlet to thereby change the ratio of volume of the inside air to the outside air

The blower 32 for blowing the air sucked via the inside/outside air switch 33 into the vehicle interior is disposed on the downstream side of the air flow of the inside/outside air switch 33. The blower 32 is an electric blower which includes a centrifugal multiblade fan (sirocco fan) driven by an electric motor, and whose number of revolutions (volume of blowing air) is controlled by a control voltage output from the air conditioning controller.

The refrigerant evaporator 20 and the refrigerant radiator 12 are disposed on the downstream side of the air flow of the blower 32 in that order with respect to the flow of the blowing air in the vehicle compartment. In short, the refrigerant evaporator 20 is disposed on the upstream side in the flow direction of the blowing air in the vehicle compartment with respect to the refrigerant radiator 12.

An air mix door 34 is disposed on the downstream side of the air flow in the refrigerant evaporator 20 and on the upstream side of the air flow in the refrigerant radiator 12. The air mix door 34 adjusts the rate of volume of the air passing through the refrigerant radiator 12 in the blowing air having passed through the refrigerant evaporator 20 A mixing space 35 is provided on the downstream side of the air flow in the refrigerant radiator 12 so as to mix the blowing air exchanging heat with the refrigerant and heated at the refrigerant radiator 12, and the blowing air bypassing the refrigerant radiator 12 and not heated

Opening holes for blowing the conditioned air mixed in the mixing space 35, into the vehicle interior as a space to be cooled are disposed on the most downstream side of the air flow in the casing 31 Specifically, the opening holes (not shown) include a face opening hole for blowing the conditioned air toward the upper body of a passenger in the vehicle compartment, a foot opening hole for blowing the conditioned air toward the foot of the passenger, and a defroster opening hole for blowing the conditioned air toward the inner side of a front glass of the vehicle.

The air mix door 34 adjusts the rate of volume of air passing through the refrigerant radiator 12 to thereby adjust the temperature of conditioned air mixed in the mixing space 35, thus controlling the temperature of the conditioned air blown from each opening hole That is, the air mix door 34 serves as a temperature adjustment portion for adjusting the temperature of the conditioned air blown into the vehicle interior.

In short, the air mix door 34 serves as a heat exchanging amount adjustment portion for adjusting the amount of heat to be exchanged between the blowing air in the vehicle compartment and the refrigerant discharged from the compressor 11 in the refrigerant radiator 12 The air mix door 34 is driven by a servo motor (not shown) whose operation is controlled based on the control signal output from the air conditioning controller

The face opening hole, foot opening hole, and defroster opening hole have, at the respective upstream sides of the air flows thereof, a face door for adjusting an opening area of the face opening hole, a foot door for adjusting an opening area of the foot opening hole, and a defroster door for adjusting an opening area of the defroster opening hole, respectively (all doors being not shown)

The face door, foot door, and defroster door serve as an opening hole mode switching portion for switching among opening hole modes The doors are driven by a servo motor (not shown) whose operation is controlled based on a control signal output from the air conditioning controller via a link mechanism or the like.

In contrast, the downstream sides of the air flows of the face opening hole, the foot opening hole, and the defroster opening hole are connected to a face air outlet, a foot air outlet, and a defroster air outlet provided in the vehicle compartment, respectively, via ducts forming the respective air passages For example, as shown in Fig. 4, the face opening hole leads to a front face air outlet P1 provided in the center of the instrument panel P in the horizontal direction, and side face air outlets P2 provided on both ends of the panel P in the horizontal direction.

As can be seen from Fig 4, the front face air outlets P1 and the side face air outlets P2 are provided in positions for a driver seat and a front passenger seat, respectively. For example, in the heating operation, the blowing air heated by the heat exchange portion on the driver seat side of the refrigerant radiator 12 is blown mainly toward the driver seat, while the blowing air heated by the heat exchanger region on the front passenger-seat side is blown mainly toward the front passenger seat

Next, an electric controller of this embodiment will be described later. The air conditioning controller is comprised of the known microcomputer including a CPU, a ROM, and a RAM, and peripheral circuits thereof The controller controls the operation of each of various types of air conditioning controller 11, 15a, 15b, 17, and 32 connected to its output by executing various operations and processing based on air conditioning control programs stored in the ROM.

A group of various sensors for control of air conditioning is coupled to the input side of the air conditioning controller The sensors include an inside air sensor for detecting a temperature of the vehicle interior, an outside air sensor for detecting a temperature of the outside air, a solar radiation sensor for detecting an amount of solar radiation in the vehicle interior, and an evaporator temperature sensor for detecting a temperature of air blown from the refrigerant evaporator 20 (evaporator temperature) And, the sensors also include a discharge refrigerant temperature sensor for detecting a temperature of the refrigerant discharged from the compressor 11, and an outlet refrigerant temperature sensor for detecting a refrigerant temperature on the outlet side of the outdoor heat exchanger 16.

An operation panel (not shown) disposed near an instrument board at the front of the vehicle compartment is connected to the input side of the air conditioning controller. Operation signals are input from various types of air conditioning operation switches provided on the operation panel Various air conditioning operation switches provided on the panel include an operation switch for the air conditioner for the vehicle, a vehicle-interior temperature setting switch for setting the temperature of the vehicle interior, and a selection switch for selecting an operation mode

The air conditioning controller includes a control portion for controlling the electric motor 11b for the compressor 11, the opening/closing valve 15a, the three-way valve 15b, and the like which are integral with each other, and is designed to control the operations of these components, In the air conditioning controller of this embodiment, the structure (hardware and software) for controlling the operation of the compressor 11 serves as a refrigerant discharge capacity control portion. The structure for controlling the operations of the respective devices 15a and 15b forming the refrigerant flow path switching portion serves as a refrigerant flow path control portion.

Next, the operation of the vehicle air conditioner 1 with the above arrangement in this embodiment will be described below. The vehicle air conditioner 1 of this embodiment can execute the heating operation for heating the vehicle interior, and the cooling operation for cooling the vehicle interior as mentioned above Now, each operation will be explained in the following

(a) Heating Operation

The heating operation is started when the heating operation mode is selected by the selection switch with the operation switch of the operation panel turned on (ON). In the heating operation, the air conditioning controller closes the opening/closing valve 15a, and switches the three-way valve 15b to the refrigerant flow path for coupling the outlet side of the outdoor heat exchanger 16 to the inlet side of the accumulator 18 Thus, the heat pump cycle 10 is switched to the refrigerant flow path for allowing the refrigerant to flow as indicated by a solid arrow in Fig 1.

The air conditioning controller with the above refrigerant flow paths reads a detection signal from the above sensor group for the air conditioning control and an operation signal from the operation panel Based on the detection signal and the operation signal, a target outlet air temperature TAO is calculated as the target temperature of the air to be blown into the vehicle interior. Further, the operating states of various air conditioning control components connected to the output side of the air conditioning controller are determined based on the calculated target outlet air temperature TAO and the detection signal from the sensor group

For example, the refrigerant discharge capacity of the compressor 11, that is, a control signal output to the electric motor of the compressor 11 is determined as follows First, a target evaporator outlet air temperature TEO of the refrigerant evaporator 20 is determined based on the target outlet air temperature TAO with reference to a control map previously stored in the air conditioning controller

Based on a deviation between the target evaporator outlet air temperature TEO and the blown air temperature from the refrigerant evaporator 20 detected by the evaporator temperature sensor, the control signal to be output to the electrode motor of the compressor 11 is determined such that the blown air temperature of the air blown from the refrigerant evaporator 20 approaches the target evaporator outlet air temperature TEO by use of a feedback control method.

The control signal to be output to the servo motor of the air mix door 34 is determined based on the target outlet air temperature TAO, the blown air temperature of the refrigerant evaporator 20, and the temperature of the refrigerant discharged from the compressor 11 which is detected by the refrigerant temperature sensor such that the temperature of air blown into the vehicle interior becomes a desired temperature set by the passenger using the vehicle-interior temperature setting switch.

As shown in Fig. 1, during the heating operation, the opening degree of the air mix door 34 may be controlled such that all the vehicle-interior blowing air blown from the blower 32 passes through the refrigerant radiator 12

Then, the control signals determined as described above are output to various air conditioning control components Thereafter, until the stopping of the vehicle air conditioner is requested by the operation panel, a control routine is repeated at every predetermined control cycle. The control routine involves a series of processes: reading of the above detection signal and operation signal, calculation of the target outlet air temperature TAO, determination of the operating states of various air conditioning control components, and output of the control voltage and the control signal in that order. Such repetition of the control routine is basically performed in the cooling operation in the same way.

In the heat pump cycle 10 during the heating operation, the high-pressure refrigerant discharged from the compressor 11. flows into the refrigerant radiator 12 The refrigerant flowing into the refrigerant radiator 12 exchanges heat with the vehicle interior blowing air blown from the blower 32 through the refrigerant evaporator 20 to radiate the heat therefrom, so that the blowing air in the vehicle compartment is heated

The high-pressure refrigerant flowing from the refrigerant radiator 12 flows into the fixed throttle 13 for heating to be decompressed and expanded by the throttle because the opening/closing valve 15a is closed The low-pressure refrigerant decompressed and expanded by the fixed throttle 13 for heating flows into an outdoor heat exchanger 16. The low-pressure refrigerant flowing into the outdoor heat exchanger 16 absorbs heat from the outside air blown by the blower fan 17 to evaporate itself

The three-way valve 15b is switched to a refrigerant flow path for coupling the outlet of the outdoor heat exchanger 16 to the inlet of the accumulator 18, so that the refrigerant flowing from the outdoor heat exchanger 16 flows into the accumulator 18 to be separated into gas and liquid phases. The gas-phase refrigerant separated by the accumulator 18 is sucked into and compressed again by the compressor 11

As mentioned above, in the heating operation, the blowing air in the vehicle compartment is heated by the refrigerant radiator 12 with the heat contained in the refrigerant discharged from the compressor 11, which can perform the heating operation of the vehicle interior as the space for air conditioning

(b) Cooling Operation

The cooling operation is started when the cooling operation mode is selected by the selection switch with the operation switch of the operation panel turned on (ON) In the cooling operation, the air conditioning controller opens the opening/closing valve 15a, and switches the three way valve 15b to the refrigerant flow path for connecting the outlet side of the outdoor heat exchanger 16 to the inlet side of the fixed throttle 19 for cooling. Thus, the heat pump cycle 10 is switched to the refrigerant flow path for making the refrigerant flow as indicated by the solid arrow in Fig 2

In the heat pump cycle 10 during the cooling operation, the high-pressure refrigerant discharged from the compressor 11 flows into the refrigerant radiator 12, and exchanges heat with the blowing air in the vehicle compartment blown from the blower 32 and having passed through the refrigerant evaporator 20 to radiate heat therefrom The high-pressure refrigerant flowing from the refrigerant radiator 12 flows into the outdoor heat exchanger 16 via the bypass passage 14 for the fixed throttle because the opening/closing valve 15a is opened

The low-pressure refrigerant flowing into the outdoor heat exchanger 16 further radiates heat toward the outside air blown by the blower fan 17 The three-way valve 15b is switched to the refrigerant flow path for coupling the outlet side of the outdoor heat exchanger 16 to the inlet side of the fixed throttle 19 for cooling, so that the refrigerant flowing from the outdoor heat exchanger 16 is decompressed and expanded by the fixed throttle 19 for cooling

The refrigerant flowing from the fixed throttle 19 for cooling flows into the refrigerant evaporator 20, and absorbs heat from the blowing air in the vehicle compartment blown by the blower 32 to evaporate itself In this way, the blowing air in the vehicle compartment can be cooled. The refrigerant flowing from the refrigerant evaporator 20 flows into the accumulator 18, and is then separated into liquid and gas phases by the accumulator 18

The gas-phase refrigerant separated by the accumulator 18 is sucked into and compressed by the compressor 11 again As mentioned above, during the cooling operation, the low-pressure refrigerant absorbs heat from the blowing air in the vehicle compartment and evaporates itself at the refrigerant evaporator 20 to thereby cool the blowing air in the vehicle compartment, which can perform cooling of the vehicle interior

During the cooling operation, when the passenger sets the temperature higher than the vehicle interior temperature by the vehicle-interior temperature setting switch, the opening degree of the air mix door 34 is adjusted such that the temperature of the blowing air in the vehicle compartment is higher than the vehicle interior temperature In such a case, the refrigerant evaporator 20 can cool the blowing air in the vehicle compartment and reduce the absolute humidity to achieve the dehumidification and heating of the vehicle interior,

As mentioned above, the vehicle air conditioner 1 of this embodiment can perform switching between the refrigerant flow paths of the heat pump cycle 10 to execute the heating operation, the cooling operation, and the dehumidification and heating operation

In this embodiment, the refrigerant radiator 12 is arranged in the indoor air conditioning unit 30 so as to satisfy the relationship expressed by the above formula 4 Such arrangement taking into consideration the parameters, including the flow velocity U, viscosity $\mu$, and density $\rho$ of the refrigerant, and the inclination angle $\theta$, can prevent the condensed refrigerant from remaining in the specific tube 121 even in the refrigerant radiator 12 that causes the phase change of the refrigerant flowing through the tubes 121.

Thus, this embodiment can suppress the non-uniform loss in pressure caused in the refrigerant flowing through the tubes 121 to thereby prevent the formation of the specific heat exchange portion with the relatively low temperature in the heat exchange portions of the refrigerant radiator. As a result, even when fluctuations in load on air conditioning of the heat pump cycle 10 or the like change the flow velocity of the refrigerant flowing through the tubes 121, the reduction in heat radiation performance of the refrigerant radiator 12 can be suppressed to reduce the non-uniform temperature distribution in the horizontal direction of air heated and blown by the refrigerant radiator 12

As mentioned above, in the vehicle air conditioner 1 of this embodiment, the air heated by the driver-seat side heat exchange portion of the refrigerant radiator 12 is blown mainly toward the driver seat, whereas the air heated by the front passenger-seat side heat exchange portion is blown mainly toward the front passenger seat Thus, this embodiment can provide the refrigerant radiator 12 for decreasing the difference in temperature in the horizontal direction of blowing air flowing from the refrigerant radiator 12, which is very effective in reduction of the difference in temperature between the blowing air blown toward the driver seat, and the blowing air blown toward the front passenger seat.

In the multi-flow heat exchanger, like the refrigerant radiator 12 of this embodiment, the flow rate of refrigerant flowing through each tube 121 is more likely to be changed depending on the positions of the refrigerant inlet of the inlet side connector 122a and the refrigerant outlet of the outlet side connector 123a provided in the header tanks 122 and 123, respectively, which leads to the non-uniform temperature distribution of the blowing air. Thus, the application of the arrangement conditions that can reduce the difference in temperature of the blowing air in the refrigerant radiator 12 is very effective

In the case of the refrigerant radiator that allows the refrigerant to flow through the tube 121 from the lower side to the upper side, the refrigerant radiator 121 is desirably disposed so as to satisfy the above formula 4.

Thus, as indicated by the above formula 4, the parameters A to G are represented by a function of an inclination angle $\theta$, which can suppress the non-uniform temperature distribution in the horizontal direction of the air blown from the refrigerant radiator at any inclination angle $\theta$ when the flow direction of refrigerant flowing through the tube 121 is directed upward

Second Embodiment

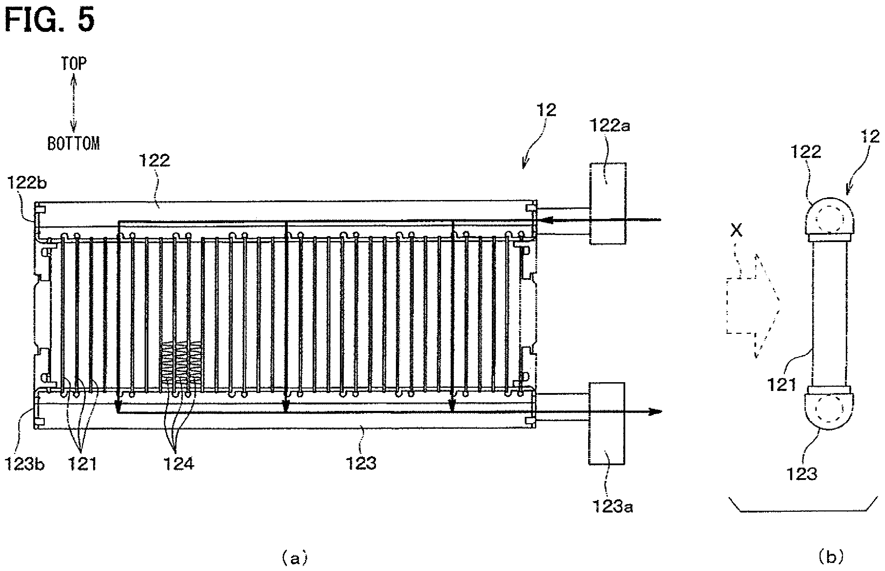

In this embodiment, as shown in Figs. 5(a) and 5(b), some changes are made to the positions of the inlet side connector 122a and the outlet side connector 123a of the first embodiment, by way of example Figs. 5(a) and 5(b) correspond to Figs 3(a) and 3(b), respectively, and the same or equivalent parts as those in Figs 3(a) and 3(b) are represented by the same reference characters The same goes for the following drawings

In the refrigerant radiator 12 of this embodiment, the inlet side connector 122a is positioned on the upper side, and the outlet side connector 123a is positioned on the lower side, so that the refrigerant flows through the tubes 121 from the upper side to the lower side

The refrigerant radiator for allowing the refrigerant to flow through the tubes 121 from the upper side to the lower side does not need to take into consideration the loss in pressure due to the gravity acting on the condensed refrigerant, and can suppress the non-uniform loss in pressure caused by the refrigerant flowing through the tubes 121 without considering the inclination angle θ to thereby prevent the formation of the specific heat exchanger range with the relatively low temperature in the heat exchange portions of the refrigerant radiator

Thus, it is not necessary to place the tubes 121 such that the longitudinal direction of the tube 121 is slanted with respect to the horizontal direction. In short, the tube 121 is disposed to have its longitudinal direction directed substantially vertically, causing the refrigerant to flow through the tubes 121 substantially vertically.

As shown in Fig 10, a parameter similarly representing the state of flow (influence of gravity) with respect to the refrigerant flow includes a Grashof number Gras calculated by a gravitational acceleration g, a cubical expansion force β, a viscosity μ, a density ρ, and the like In a region satisfying the following relationship between the Reynolds number Re and the Grashof number Gras of the refrigerant flowing through the tubes 121: $Re^2 > Gras$, that is, in a region satisfying the formula of $62\,42 \leq Re$, the flow of refrigerant flowing through the tubes 121 becomes a forced convection, which results in a large flow velocity of the refrigerant passing through the tubes 121, thus making the flow velocities of the refrigerant in the tubes 121 non-uniform to cause the non-uniform temperature distribution of the respective heat exchange portions.

As shown in Fig 8, in a region with a refrigerant flow rate Gr of 47 kg/h or less, in other words, in a region of $Re \leq 1234$, the refrigerant evaporator for allowing the refrigerant to flow through the tube 121 from the lower side to the upper side decreased its heat radiation performance, regardless of the inclination angle θ of the tube 121, as compared to the case where the refrigerant flows through the tube 121 from the upper side to the lower side

Thus, in the region that satisfies the formula of $62,42 \leq Re \leq 1234$, the flow of refrigerant flowing through the tubes 121 is desirably directed from the upper side to the lower side with less influence of the gravity on the condensed refrigerant

Third Embodiment

In this embodiment, as shown in Figs. 6(a) and 6(b), some changes are made to the structure of the refrigerant radiator 12 of the first embodiment. In the refrigerant radiator 12 of this embodiment, a separator 123c is disposed in the upper header tank 123 to separate the internal space of the header tank 123 into two sections in the longitudinal direction, namely, a distribution space 123d and a collection space 123e. Figs 6(a) and 6(b) correspond to Figs 3(a) and 3(b), and 5(a) and 5(b) of the first embodiment, respectively

The tubes 121 of this embodiment are classified into a first tube group 121a coupled to the collection space 123e of the upper header tank 123, and a second tube group 121b coupled to the distribution space 123d thereof. The upper header tank 123 is further coupled to an inlet side connector 123f for allowing the refrigerant discharged from the compressor 11 to flow into the distribution space 123d, and to an outlet side connector 123a for allowing the refrigerant to flow from the inside of the collection space 123e

Thus, in the refrigerant radiator 12 of this embodiment, as indicated by a thick arrow of Fig. 6, the refrigerant discharged from the compressor 11 flows into the distribution space 123d of the upper header tank 123 via the inlet side connector 123f to be distributed to the tubes 121 forming the second tube group 121b

Then, the refrigerant flowing into the tubes forming the second tube group 121b exchanges heat with the blowing air in the vehicle compartment in passing through the tubes 121, and flow out of the tubes 121. The refrigerants flowing from the tubes 121 forming the second tube group 121b are collected into the lower header tank 122, and then are distributed to the tubes 121 forming the first tube group 121a.

Further, the refrigerant flowing into the tubes 121 forming the first tube group 121a exchanges heat with the blowing air in the vehicle compartment in passing through the tubes 121, and flows out of the tubes 121. The refrigerant flowing from the tubes 121 forming the first tube group 121a are collected in the collection space 123e of the upper header tank 122, and then flow from the space via the outlet side connector 123a

That is, in the refrigerant radiator 12 of this embodiment, the refrigerant flowing through the second tube group 121b flows from the upper side to the lower side, whereas the refrigerant flowing through the first tube group 121a flows from the lower side to the upper side

In the refrigerant radiator 12 of this embodiment, the refrigerant in the gas-phase state exchanges heat during flowing through the second tube group 121b, and becomes a gas-liquid two-phase refrigerant during flowing from an intermediate part to a downstream part (which is enclosed by a circle indicated by a broken line of Fig. 6) of the first tube group 121a in the refrigerant flow direction. Then, the refrigerant becomes a liquid-phase refrigerant on the downstream side of the first tube group

Thus, in this embodiment, the predetermined position can be any arbitrary position from the intermediate part to the downstream part of the first tube group 121a in the refrigerant flow direction In the above position, the refrigerant flows from the lower side to the upper side, and thus the inclination angle θ of the refrigerant radiator 12 of this embodiment is set to the same as that in the first embodiment The structure and operation of other components of the vehicle air conditioner 1 are the same as those in the first embodiment

In the refrigerant radiator 12 of this embodiment, in the heat exchange portion formed by the second tube group 121b, the refrigerant radiates heat therefrom in the gas-phase state as it is, which hardly causes the degradation in heat radiation performance due to the difference in condensation of the refrigerant between the tubes 121 As a result, the temperature of blowing air in the vehicle compartment blown from the heat exchange portion formed by the second tube group 121b is less likely to vary between the tubes.

In contrast, in the heat exchange portion formed by the first tube group 121a, the arrangement conditions represented by the above formula 4 are satisfied, which can provide the same effects as those of the first embodiment

As a result, even when the flow velocity of refrigerant flowing through the tubes 121 varies depending on fluctuations in load on air conditioning of the heat pump cycle 10, the entire refrigerant radiator 12 can suppress the reduction in heat radiation performance and also can decrease the difference in temperature in the horizontal direction of air heated and blown by the refrigerant radiator 12.

Also, in the refrigerant radiator 12 of this embodiment, even when the flow direction. of refrigerant is directed from the upper side to the lower side in the predetermined position where the refrigerant flowing through the tubes 121 becomes the gas-liquid two-phase refrigerant, the refrigerant radiator 12 is arranged to satisfy the relationship represented by the above formula 4, which can provide the same effects.

Fourth Embodiment

In this embodiment, as shown in Figs 7(a) and 7(b), some changes are made to the structure of the refrigerant radiator 12 of the first embodiment by way of example. In the refrigerant radiator 12 of this embodiment, the internal space of the upper header tank 123 is separated in the flow direction of the blowing air into a distribution space 123d and a collection space 123e Figs. 7(a) and 7(b) correspond to Figs 3(a) and 3(b) and Figs. 5(a) and 5(b) of the first embodiment, respectively

Like the second embodiment, the tubes 121 of this embodiment are also classified into the first tube group 121a coupled to the collection space 123e, and the second tube group 121b coupled to the distribution space 123d. Further, the first tube group 121a is positioned on the downstream side of the second tube group 121b in the flow direction X of the blowing air in the vehicle compartment In short, the tubes 121 are arranged in a plurality of lines (in this embodiment, in two lines) in the flow direction X of the blowing air in the vehicle compartment.

The header tank 123 is provided with an inlet side connector 123f for allowing the refrigerant discharged from the compressor 11 to flow into the distribution space 123d, and an outlet side connector 123a for allowing the refrigerant to flow from the inside of the collection space 123e

Thus, also in the refrigerant radiator 12 of this embodiment, as indicated by a thick arrow of Fig. 7(a), the refrigerant discharged from the compressor 11 flows from the distribution space 123d of the upper header tank 123 to the tubes 121 on the upstream side of air flow included in the second tube group 121b, the lower header tank 122, the tubes 121 on the downstream side of air flow included in the first tube group 121a, and the collection space 123e of the upper header tank 122 in that order, and then flows from the radiator via the outlet side connector 123a

In the refrigerant radiator 12 of this embodiment, the refrigerant exchanges heat in the gas-phase state during flowing through the second tube group 121b on the upstream side of the air flow, and becomes a gas-liquid two-phase refrigerant during flowing from an intermediate part to a downstream part in the refrigerant flow direction of the first tube group 121a located on the downstream side of the air flow Then, the refrigerant becomes a liquid-phase refrigerant on the downstream side of the first tube group

Thus, in this embodiment, the predetermined position can be any arbitrary position from the intermediate part to the downstream part of the first tube group 121a in the refrigerant flow direction The inclination angle θ of the refrigerant radiator 12 of this embodiment is set to the same as that in the first embodiment. The structure and operation of other components of the vehicle air conditioner 1 are the same as those in the first embodiment.

The refrigerant radiator 12 of this embodiment is structured as mentioned above. In the heat exchange portion on the air flow upstream side formed by the second tube group 121b, the refrigerant radiates heat therefrom in the gas-phase state as it is, which hardly causes the degradation in heat radiation performance due to the difference in condensation of the refrigerant, resulting in less non-uniform temperature distribution of the vehicle-interior blowing air blown from the heat exchange portion

In contrast, in the heat exchange portion on the air flow downstream side of the first tube group 121a, the arrangement conditions represented by the above formula 4 are satisfied, which can provide the same effects as those of the first embodiment Thus, the entire refrigerant radiator 121 can suppress the reduction in heat radiation performance of the radiator and also can suppress the formation of the non-uniform temperature distribution in the horizontal direction of air heated and blown by the refrigerant radiator 12.

In the refrigerant radiator 12 of this embodiment, as shown in Fig. 7(b), the refrigerant distributed by the distribution space 123d of the upper header tank 123 turns around via the lower header tank 122 to return to the collection space 123e of the upper header tank 123.

Thus, a region (superheat region) through which the gas-phase refrigerant with a relatively high degree of superheat flows can be formed on the upper side in the windward-side heat exchange portion, and a region (supercooling region) through which the liquid-phase refrigerant with a relatively low degree of supercooling can be formed on the upper side in the leeward-side heat exchange portion Thus, the superheat region and the supercooling region can be superimposed over each other as viewed in the flow direction X of the blowing air, which can also suppress the non-uniform temperature distribution of the blowing air in the vertical direction.

The refrigerant radiator 12 of this embodiment allows the refrigerant to flow from the tubes 121 on the upstream side of the blowing air flow, and to turn around into the downstream side tube 121, by way of example Alternatively, the refrigerant flowing from the downstream side tube 121 may be turned around into the upstream side tube 121.

Also, even when the flow direction of refrigerant in the predetermined position, which flows through the tube 121 in the gas-liquid two-phase state, is directed from the upper side to the lower side, the refrigerant radiator 12 of this embodiment can also arrange the refrigerant radiator 12 so as to satisfy the above relationship represented by the formula 4 to provide the same effects

Other Embodiments

The present invention is not limited to the above embodiments, and various modifications and changes can be made to the disclosed embodiments without departing from the scope of the invention.

(1) Although in the above embodiments, the tube 121 extending in one direction is used as the tube 121 of the refrigerant radiator 12 by way of example, the tube 121 applicable to the refrigerant radiator 12 of the disclosure is not limited thereto That is, any other tube with at least one component extending vertically may be used even though the tube is formed in a meandering shape or the like.

For example, the tube 121 may be curved in a U-like shape, and the inlet and outlet of the tube 121 may be positioned on the same side of the tube 121 in the longitudinal direction Such a tube can be used to achieve the substantially same refrigerant radiator 12 as that of the third embodiment, which can remove the header tank 122 disposed on the lower side

(2) The refrigerant radiator 12 in the above embodiments is adapted to exchange heat between the refrigerant and the blowing air in the vehicle compartment by way of example, but the heat radiator 12 of the disclosure is not limited thereto. For example, the heat radiator may be adapted to be capable of exchanging heat among a plurality of kinds of fluids, including refrigerant, blowing air in the vehicle compartment, another heat medium, and the like.

A heat exchanger that can exchange heat among the plurality of fluids includes refrigerant tubes for allowing the refrigerant to flow therethrough, and heat medium tubes for allowing the heat medium to flow therethrough, both the refrigerant tubes and the heat medium tubes being alternately laminated over each other An air passage through which the blowing air flows is formed between the adjacent refrigerant tube and heat medium tube And fins are in the air passages to be coupled to both the refrigerant tubes and the heat medium tubes to promote the heat exchange between the refrigerant and the blowing air, and between the heat medium and the blowing air, while enabling the heat transfer between the refrigerant and the heat medium.

(3) In the above embodiments, the refrigerant radiator 12 is applied to the vehicle air conditioner by way of example Some devices mounted on the vehicle change the position thereof with respect to the horizontal direction when the entire vehicle inclines upon acceleration or deceleration, turning left or right, or stopping or parking on an upslope Thus, each of the above embodiments desirably satisfies the relationship represented by the above formula 4 with respect to the inclination angle $\theta$ in the entire range of $\theta \pm \Delta\theta$, taking into consideration a change $\Delta\theta$ due to the inclination of the entire vehicle mentioned above.

(4) Although the above embodiments have described the application of the heat pump cycle 10 with the refrigerant radiator 12 of the disclosure to the vehicle air conditioner by way of example, the application of the heat pump cycle 10 with the refrigerant radiator 12 of the disclosure is not limited thereto. For example, the heat pump cycle 10 with the refrigerant radiator 12 may be applied to a stationary air conditioner, a low temperature storage, a cooling and heating device for a vending machine, and the like.

The present invention has been disclosed with reference to the preferred embodiments However, it is to be understood that the present invention is not limited to the preferred embodiments and the structures disclosed above The invention is intended to cover various modifications and equivalent arrangements In addition, other preferred embodiments which include one additional element or which lose one element with respect to the disclosed embodiments, or various other combinations of the embodiments also fall within the scope and spirit of the present invention

**Claims**

1. A method for installing a refrigerant radiator in a vehicle, the refrigerant radiator being part of a vapor-compression refrigerant cycle (10) and being adapted to exchange heat between a high-temperature and high-pressure refrigerant compressed by a compressor (11) of the vapor-compression refrigerant cycle (10) and air blown into a space for air conditioning to thereby radiate heat from a gas-phase refrigerant having a degree of superheat so as to transfer the gas-phase refrigerant to a liquid-phase refrigerant having a degree of supercooling, the refrigerant radiator comprising:

   a refrigerant,
   a plurality of tubes (121) allowing the refrigerant to flow therethrough,
   wherein the tubes (121) extend in a direction perpendicular to a horizontal direction, or at an angle with respect to the horizontal direction for allowing the refrigerant to flow therethrough from a lower side to an upper side,
   wherein the refrigerant radiator is installed so that in use the tubes (121) satisfy the following relationship:

   $$Re \geq A \times X^6 + B \times X^5 + C \times X^4 + D \times X^3 + E \times X^2 + F \times X + G$$

   $$A = -0.0537 \times \theta^2 + 9.7222 \times \theta + 407.19$$

   $$B = -(-0.2093 \times \theta^2 + 37.88 \times \theta + 1586.3)$$

   $$C = -0.3348 \times \theta^2 + 60.592 \times \theta + 2538.1$$

   $$D = -(-0.2848 \times \theta^2 + 51.53 \times \theta + 2158.2)$$

   $$E = -0.1402 \times \theta^2 + 25.365 \times \theta + 1062.8$$

   $$F = -(-0.0418 \times \theta^2 + 7.5557 \times \theta + 316.46)$$

   $$G = -0.0132 \times \theta^2 + 2.3807 \times \theta + 99.73$$

   wherein $\theta$ (°) is an inclination angle formed by a flow direction of the refrigerant flowing through the tube (121) and the horizontal direction; X is a dryness of the refrigerant in a predetermined position where the refrigerant flowing through the tube (121) is a gas-liquid two-phase refrigerant; and Re is a Reynolds number of the refrigerant in the predetermined position that is determined from an average flow velocity (m/S) of the refrigerant flowing through the tube (121), and
   wherein the inclination angle ($\theta$) is in a range of more than 0 ° and not more than 90 ° ($0 < \theta \leq 90$ °).

2. The method according to claim 1, further comprising a header tank (122, 123) disposed at least at one side end of each of the tubes (121) to extend in a lamination direction of the tubes (121), to collect or distribute the refrigerant.

3. The method according to claim 1 or 2, wherein

the tubes (121) for allowing the refrigerant to flow therethrough from the lower side to the upper side are a first tube group (121a), and
the tubes (121) further include a second tube group (121b) for allowing the refrigerant to flow therethrough from the upper side to the lower side.

4. The method according to claim 2, wherein

an internal space of the header tank (123) is separated into a plurality of spaces (123d, 123e),
one separated space (123d) is provided with a refrigerant inlet (123f) for allowing the gas-phase refrigerant to flow into the one separated space, and
the other separated space (123e) is provided with a refrigerant outlet (123a) for allowing the liquid-phase refrigerant to flow therefrom.

5. The method according to any one of claims 1 to 4, wherein the tubes (121) are arranged in a flow direction of the air.

6. The method according to claim 1 or 2, wherein the flow direction of the refrigerant flowing through the tubes (121) is on the same direction.

7. The method according to any one of claims 1 to 6, wherein

the refrigerant cycle (10) is used for a vehicle air conditioner, and
the space for air conditioning is an interior of a vehicle.

**Patentansprüche**

1. Verfahren zum Installieren eines Kältemittelkühlers in einem Fahrzeug, wobei der Kältemittelkühler Teil eines Dampfkompressionskältemittelkreislaufs (10) ist und angepasst ist, um Wärme zwischen einem Hochtemperatur- und Hochdruckkältemittel auszutauschen, die von einem Kompressor (11) des Dampfkompressionskältemittelkreislaufs (10) komprimiert wird, und Luft, die in einen Raum zur Klimatisierung geblasen wird, um dadurch Wärme von einem gasphasigen Kältemittel mit einem Überhitzungsgrad abzustrahlen, um das gasphasige Kältemittel auf ein flüssigphasiges Kältemittel mit einem Unterkühlungsgrad zu übertragen, wobei der Kältemittelkühler umfasst:

ein Kältemittel,
eine Vielzahl von Rohren (121), welche dem Kältemittel ermöglichen, dort hindurchzuströmen kann,
wobei sich die Rohre (121) in einer Richtung senkrecht zu einer horizontalen Richtung, oder in einem Winkel in Bezug auf die horizontale Richtung, um zu ermöglichen, dass das Kältemittel von einer unteren Seite zu einer oberen Seite durch sie hindurch strömt,
wobei der Kältemittelkühler so installiert ist, dass die Rohre (121) im Gebrauch die folgende Beziehung erfüllen:

$$Re \geq A \times X^6 + B \times X^5 + C \times X^4 + D \times X^3 + E \times X^2 + F \times X + G$$

$$A = -0{,}0537 \times \theta^2 + 9{,}7222 \times \theta + 407{,}19$$

$$B -(-0{,}2093 \times \theta^2 + 37{,}88 \times \theta + 1586.3)$$

$$C = -0{,}3348 \times \theta^2 + 60{,}592 \times \theta + 2538{,}1$$

$$D = -(-0{,}2848 \times \theta^2 + 51{,}53 \times \theta + 2158.2)$$

$$E = -0,1402 \times \theta^2 + 25,365 \times \theta + 1062,8$$

$$F = -(0,0418 \times \theta^2 + 7,5557 \times \theta + 316,46)$$

$$G = -0,0132 \times \theta^2 + 2,3807 \times \theta + 99,73$$

wobei θ (°) ein Neigungswinkel ist, der durch eine Strömungsrichtung des durch das Rohr (121) strömenden Kältemittels und die horizontale Richtung gebildet wird; X eine Trockenheit des Kältemittels an einer vorbestimmten Position ist, in welcher das durch das Rohr (121) strömende Kältemittel ein Gas-/Flüssigkeits-Zweiphasen-Kältemittel ist; und Re eine Reynolds-Zahl des Kältemittels in der vorbestimmten Position ist, die aus einer durchschnittlichen Strömungsgeschwindigkeit (m/s) des durch das Rohr (121) strömenden Kältemittels bestimmt wird, und
wobei der Neigungswinkel (θ) in einem Bereich von mehr als 0 ° und nicht mehr als 90 ° (0 < θ ≤ 90 °) liegt.

2. Verfahren nach Anspruch 1, das des Weiteren einen Sammelbehälter (122, 123) umfasst, der zumindest an einem Seitenende jedes der Rohre (121) angeordnet ist, um sich in einer Laminierungsrichtung der Rohre (121) zu erstrecken, um das Kältemittel zu sammeln oder zu verteilen.

3. Verfahren nach Anspruch 1 oder 2, wobei

die Rohre (121) zur Ermöglichung des Durchströmens des Kältemittels von der unteren Seite zu der oberen Seite durch sie hindurch eine erste Rohrgruppe (121a) sind, und
die Rohre (121) ferner eine zweite Rohrgruppe (121b) zur Ermöglichung des Durchströmens des Kältemittels von der oberen Seite zur unteren Seite durch sie hindurch umfassen.

4. Verfahren nach Anspruch 2, wobei

ein Innenraum des Sammelbehälters (123) in mehrere Räume (123d, 123e) unterteilt ist,
ein getrennter Raum (123d) mit einem Kältemitteleinlass (123f) versehen ist, um zu ermöglichen, dass das gasförmige Kältemittel in den einen getrennten Raum strömt, und
der andere abgetrennte Raum (123e) mit einem Kältemittelauslass (123a) versehen ist, um zu ermöglichen, dass das flüssigphasige Kältemittel daraus strömt.

5. Verfahren nach einem der Ansprüche 1 bis 4, bei dem die Rohre (121) in einer Strömungsrichtung der Luft angeordnet sind.

6. Verfahren nach Anspruch 1 oder 2, wobei die Strömungsrichtung des durch die Rohre (121) strömenden Kältemittels in der gleichen Richtung ist.

7. Verfahren nach einem der Ansprüche 1 bis 6, wobei

der Kältemittelkreislauf (10) für eine Fahrzeugklimaanlage verwendet wird, und
der Raum für die Klimaanlage ein Innenraum eines Fahrzeugs ist.

## Revendications

1. Procédé d'installation d'un radiateur de fluide frigorigène dans un véhicule, le radiateur de fluide frigorigène faisant

partie d'un cycle de fluide frigorigène à compression de vapeur (10) et étant adapté pour échanger de la chaleur entre un fluide frigorigène à haute température et à haute pression comprimé par un compresseur (11) du cycle de fluide frigorigène à compression de vapeur (10) et de l'air soufflé dans un espace pour que la climatisation rayonne ainsi de la chaleur à partir d'un fluide frigorigène en phase gazeuse ayant un degré de surchauffe de manière à transférer le fluide frigorigène en phase gazeuse vers un fluide frigorigène en phase liquide ayant un degré de surfusion, le radiateur de fluide frigorigène comprenant : un fluide frigorigène,

une pluralité de tubes (121) permettant au fluide frigorigène de s'y écouler,
dans lequel les tubes (121) s'étendent dans une direction perpendiculaire à une direction horizontale, ou à un angle par rapport à la
direction horizontale pour permettre au fluide frigorigène de s'y écouler d'un côté inférieur vers un côté supérieur,
dans lequel le radiateur de fluide frigorigène est installé de sorte qu'en cours d'utilisation, les tubes (121) satisfassent à la relation suivante :

$$Re \geq A \times X^6 - B \times X^5 + C \times X^4 \times D \times X^3 + E \times X^2 + F \times X + G$$

$$A = -0,0537 \times \theta^2 + 9,7222 \times \theta + 407,19$$

$$B = -(-0,2093 \times \theta^2 + 37,88 \times \theta + 1586,3)$$

$$C = -0,3348 \times \theta^2 + 60,592 \times \theta + 2538,1$$

$$D = -(-0,2848 \times \theta^2 + 51,53 \times \theta + 2158,2)$$

$$E = -0,1402 \times \theta^2 + 25,365 \times \theta + 1062,8$$

$$F = -(-0,0418 \times \theta^2 + 7,5557 \times \theta + 316,46)$$

$$G = -0,0132 \times \theta^2 + 2,3807 \times \theta + 99,73$$

dans lequel $\theta$ (°) est un angle d'inclinaison formé par une direction d'écoulement du fluide frigorigène s'écoulant à travers le tube (121) et la direction horizontale ; X est une siccité du fluide frigorigène dans une position prédéterminée où le réfrigérant s'écoulant à travers le tube (121) est un fluide frigorigène à deux phases gazeuse et liquide ; et Re est un nombre de Reynolds du fluide frigorigène dans la position prédéterminée qui est déterminé à partir d'une vitesse d'écoulement moyenne (m/S) du fluide frigorigène s'écoulant à travers le tube (121), et
dans lequel l'angle d'inclinaison ($\theta$) est dans une plage de plus de 0° et pas plus de 90° ($0 < \theta \leq 90°$).

2. Procédé selon la revendication 1, comprenant en outre un collecteur (122, 123) disposé au moins à une extrémité latérale de chacun des tubes (121) pour s'étendre dans une direction de stratification des tubes (121), pour collecter ou distribuer le fluide frigorigène.

3. Procédé selon la revendication 1 ou 2, dans lequel

les tubes (121) pour permettre au fluide frigorigène de s'écouler à travers ceux-ci du côté inférieur au côté supérieur sont un premier groupe de tubes (121a), et
les tubes (121) comportent en outre un second groupe de tubes (121b) pour permettre au fluide frigorigène de s'y écouler du côté supérieur vers le côté inférieur.

4. Procédé selon la revendication 2, dans lequel

un espace interne du collecteur (123) est séparé en une pluralité d'espaces (123d, 123e),
un espace séparé (123d) est pourvu d'une entrée de fluide frigorigène (123f) pour permettre au fluide frigorigène en phase gazeuse de s'écouler dans l'un espace séparé, et
l'autre espace séparé (123e) est pourvu d'une sortie de fluide frigorigène (123a) pour permettre au fluide frigorigène en phase liquide de s'écouler à partir de celui-ci.

**5.** Procédé selon l'une quelconque des revendications 1 à 4, dans lequel les tubes (121) sont disposés dans une direction d'écoulement de l'air.

**6.** Procédé selon la revendication 1 ou 2, dans lequel la direction d'écoulement du fluide frigorigène s'écoulant à travers les tubes (121) est dans la même direction.

**7.** Procédé selon l'une quelconque des revendications 1 à 6, dans lequel

le cycle de réfrigérant (10) est utilisé pour un climatiseur de véhicule, et
l'espace pour la climatisation est un intérieur d'un véhicule.

# FIG. 1

HEATING OPERATION

# FIG. 2

COOLING OPERATION

# FIG. 3

(a)

(b)

# FIG. 4

# FIG. 5

TOP
⤒
⤓
BOTTOM

(a)

(b)

EP 2 660 548 B1

FIG. 6

FIG. 7

# FIG. 8

# FIG. 9

|  | LOW |
|---|---|
|  | ↑ |
|  | TEMP. |
|  | ↓ |
|  | HIGH |

| | (a) | (b) | (c) | (d) |
|---|---|---|---|---|
| MEASUREMENT CONDITION | Va = 434 m³/h<br>Gr = 77.9 m³/h<br>SH = 45.8 ℃<br>SC = 4.9 ℃<br>Tain = 10.1 ℃ | Va = 386 m³/h<br>Gr = 56.4 m³/h<br>SH = 46.1 ℃<br>SC = 6.3 ℃<br>Tain = 20.1 ℃ | Va = 200 m³/h<br>Gr = 40.2 m³/h<br>SH = 44.6 ℃<br>SC = 5.0 ℃(4.1℃)<br>Tain = 20.0 ℃ | Va = 200 m³/h<br>Gr = 33.5 m³/h<br>SH = 43.4 ℃<br>SC = 6.3 ℃(5.2℃)<br>Tain = 20.0 ℃ |
| TEMP. DISTRIBUTION | | | | |
| AVERAGE TEMP. OF 16 REGIONS (℃) | 41.3 37.9 35.1 38.1<br>42.5 40.0 36.6 38.3<br>45.8 44.2 41.4 42.9<br>51.8 52.6 51.6 53.7 | 49.2 45.4 42.7 46.1<br>50.1 47.6 44.8 46.7<br>52.9 51.5 49.2 50.8<br>57.8 58.5 57.7 60.0 | 51.9 46.0 44.0 50.5<br>52.0 46.9 45.2 51.2<br>53.9 50.5 49.7 54.2<br>56.8 55.9 56.4 61.9 | 42.7 42.2 42.1 50.6<br>40.4 41.2 41.9 50.7<br>41.3 43.7 45.2 53.4<br>46.3 50.2 52.3 58.1 |
| DIFFERENCE ΔT IN AVERAGE TEMP. BETWEEN LEFT AND RIGHT SIDES | 2.3℃<br>MAXIMUM TEMP<br>DIFFERENCE<br>(18.6 ℃) | 1.9℃<br>MAXIMUM TEMP<br>DIFFERENCE<br>(17.3 ℃) | 0.1℃<br>MAXIMUM TEMP<br>DIFFERENCE<br>(17.9 ℃) | 5.8℃<br>MAXIMUM TEMP<br>DIFFERENCE<br>(16.9 ℃) |

FIG. 10

**EP 2 660 548 B1**

**REFERENCES CITED IN THE DESCRIPTION**

**Patent documents cited in the description**

- JP 2004125346 A
- US 20090038562 A1
- JP 2001304719 A
- JP 2007255857 A
- JP 200997817 A